(19) Europäisches Patentamt / European Patent Office / Office européen des brevets

(11) EP 4 246 647 B1

(12) EUROPEAN PATENT SPECIFICATION

(45) Date of publication and mention of the grant of the patent:
**27.05.2026 Bulletin 2026/22**

(21) Application number: **22902477.3**

(22) Date of filing: **06.01.2022**

(51) International Patent Classification (IPC):
***H01M 10/0569** (2010.01)* ***H01M 10/0567** (2010.01)*
***H01M 10/0525** (2010.01)*

(52) Cooperative Patent Classification (CPC):
**H01M 10/0567; H01M 50/103; H01M 50/209;**
H01M 10/0569; H01M 2220/20; Y02E 60/10

(86) International application number:
**PCT/CN2022/070495**

(87) International publication number:
**WO 2023/130310 (13.07.2023 Gazette 2023/28)**

# (54) ELECTROLYTE, SECONDARY BATTERY, AND ELECTRIC DEVICE

ELEKTROLYT, SEKUNDÄRBATTERIE UND ELEKTRISCHE VORRICHTUNG

ÉLECTROLYTE, BATTERIE SECONDAIRE ET DISPOSITIF ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.09.2023 Bulletin 2023/38**

(73) Proprietor: **Contemporary Amperex Technology (Hong Kong) Limited**
**Central, Central And Western District (HK)**

(72) Inventors:
- **HUANG, Lei**
  **Ningde City, Fujian 352100 (CN)**
- **HAN, Changlong**
  **Ningde City, Fujian 352100 (CN)**
- **WU, Zeli**
  **Ningde City, Fujian 352100 (CN)**
- **JIANG, Bin**
  **Ningde City, Fujian 352100 (CN)**

(74) Representative: **Lorenz Seidler Gossel Part. mbB**
**Widenmayerstr. 23**
**80538 München (DE)**

(56) References cited:
**CN-A- 104 659 416**
**CN-A- 106 025 359**
**CN-A- 106 025 359**
**CN-A- 108 306 049**
**CN-A- 108 306 049**
**CN-A- 109 980 282**
**CN-A- 113 013 480**
**CN-B- 103 107 364**
**JP-A- 2005 243 543**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 246 647 B1

## Description

### Technical Field

The present application relates to the technical field of batteries, and in particular to a secondary battery and a power consuming device.

### Background Art

In recent years, secondary batteries have been widely used in energy storage power systems such as hydroelectric, thermal, wind and solar power plants, as well as electric tools, electric bicycles, electric motorcycles, electric vehicles, military equipment, aerospace and other fields.

Due to the great development of secondary batteries, higher requirements have also been placed on the secondary batteries in terms of dynamic performance, high-temperature cycling performance, energy density, safety performance, etc.

CN 103 107 364 B discloses an electrolyte for a low-temperature lithium ion battery, being composed of lithium hexafluorophosphate LiPF6 and a mixed solvent. The concentration of lithium hexafluorophosphate LiPF6 is 0.8 to 1.5 mol/l. The mixed solvent is composed of the following components by weight percentage: 20 % To 40% of ethylene carbonate EC, 5% to 30% of vinyl methyl carbonate EMC, 30% to 50% of methyl acetate MA, and 0.5% to 5% of vinylene carbonate VC. CN 109 980 282 A relates to a low-temperature-resistant lithium ion battery non-aqueous electrolyte containing electrolyte lithium salt, a nonaqueous organic solvent and a film-forming additive CN 106 025 359 A relates to a nonaqueous electrolyte for a lithium ion power battery, being composed of a solvent, a common lithium salt, a positive film-forming additive, an improved circulating additive, and an acidremoving and water-removing additive. CN 108 306 049 A discloses a nonaqueous electrolyte secondary battery having a nonaqueous electrolyte, wherein the nonaqueous electrolyte comprises a nonaqueous solvent and an electrolyte and wherein the nonaqueous solvent contains a cyclic carbonate solvent, a chain carbonate solvent, and an ester solvent.

### Summary of the Invention

The present application has been made in view of the above problems, and an objective of the present application is to provide a secondary battery and a power consuming device. A secondary battery using the electrolyte solution of the invention can achieve both good dynamic performance and good high-temperature cycling performance, and enable a negative electrode to be fully protected.

In order to achieve the above objective, a first aspect of the present application provides a secondary battery according to claim 1.

The present application can achieve both good dynamic performance and good high-temperature cycling performance, and enable a negative electrode to be fully protected.

In any embodiment, a relationship may be satisfied: $0.25 \leq (W1 + W2)/W3 \leq 0.36$. By satisfying the relationship, the present application can further achieve both good dynamic performance and good high-temperature cycling performance, and enable a negative electrode to be fully protected.

In any embodiment, the cyclic ester solvent may be at least one selected from ethylene carbonate, propylene carbonate, $\gamma$-butyrolactone and sulfolane. By using the cyclic ester solvent, the present application can improve the electrical conductivity of the battery, thereby improving the dynamic performance of the battery.

In any embodiment, the linear carboxylic ester solvent may be at least one selected from methyl formate, ethyl formate, methyl acetate, ethyl acetate, propyl acetate, methyl acrylate and ethyl acrylate. Through the selection of the linear carboxylic ester solvent, the present application can reduce the viscosity of the electrolyte solution, thereby improving the dynamic performance of the battery.

In any embodiment, the film forming additive may be at least one selected from vinylene carbonate, vinyl ethylene carbonate and fluoroethylene carbonate. Through the selection of the film forming additive, the present application can form a solid electrolyte interphase (SEI) film well on a negative electrode, so as to protect the negative electrode.

In any embodiment, the lithium salt may be at least one selected from $LiPF_6$, $LiBF_4$, LiFSI, LiTFSI and $LiCF_3SO_3$. Through the selection of the above compound as the lithium salt, the present application can be helpful in forming an SEI film on a negative electrode, so as to protect the negative electrode.

In any embodiment, based on the total mass of the electrolyte solution, the mass fraction W1 of the lithium salt may be 1% to 15%, preferably 6% to 15%. By making the mass fraction W1 of the lithium salt be within the above range, it can be more helpful to form an SEI film on a negative electrode, so as to protect the negative electrode.

In any embodiment, based on the total mass of the electrolyte solution, the mass fraction W2 of the film forming additive may be 1% to 10%, preferably 2% to 8%. By making the mass fraction W2 of the film forming additive be within the

above range, an SEI film can be fully formed on a negative electrode, so as to protect the negative electrode.

In any embodiment, based on the total mass of the electrolyte solution, the mass fraction W3 of the second solvent may be 30% to 70%, preferably 40% to 60%. By making the mass fraction W3 of the second solvent be within the above range, the viscosity of the electrolyte solution can be further reduced, thereby further improving the dynamic performance of the battery.

In any embodiment, based on the total mass of the electrolyte solution, the mass fraction of the first solvent may be 10% to 50%, preferably 20% to 40%. By making the mass fraction of the first solvent be within the above range, the electrical conductivity of the battery can be further improved, thereby further improving the dynamic performance of the battery.

In any embodiment, the additive may further include a water removal additive shown by the following formula I,

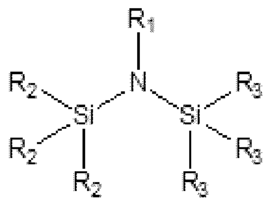

Formula I

where $R_1$ is a hydrogen atom, a lithium atom, a potassium atom, a sodium atom or a methyl group, and $R_2$ and $R_3$ are independently a C1 to C2 alkyl group or a C2 to C3 alkenyl group.

By containing the water removal additive in the electrolyte solution, water in the electrolyte solution can be fully removed, thereby improving the adverse effects caused by the water in the electrolyte solution. In addition, the water removal additive will also participate in the formation of the SEI film on the negative electrode, thereby improving the thermal stability of the SEI film.

In any embodiment, the water removal additive may be at least one selected from hexamethyldisilazane, lithium bis(trimethylsilyl)amide (LiHMDS), sodium bis(trimethylsilyl)amide (NaHMDS), potassium bis(trimethylsilyl)amide (KHMDS), heptamethyldisilazane and 1,3-divinyl-1,1,3,3-tetramethyldisilazane. Through the selection of the water removal additive, it can be helpful in removing water in the electrolyte solution, thereby improving the adverse effects caused by the water in the electrolyte solution.

In any embodiment, based on the total mass of the electrolyte solution, the mass fraction of the water removal additive may be 0.5% or less, preferably 0.1% to 0.5%. By making the mass fraction of the water removal additive be within the above range, water in the electrolyte solution can be removed more effectively, thereby further improving the adverse effects caused by the water in the electrolyte solution.

A second aspect of the present application provides a secondary battery, including the electrolyte solution of the first aspect. The secondary battery of the invention can achieve both good dynamic performance and good high-temperature cycling performance, and enable a negative electrode to be fully protected.

In any embodiment, the secondary battery may include a positive electrode plate, the positive electrode plate including a substrate and a positive electrode film layer provided on at least one side surface of the substrate, the positive electrode film layer containing a positive electrode active material, the positive electrode active material including a lithium-containing phosphate of an olivine structure.

In any embodiment, the secondary battery may satisfy $1\ g/\mu m \leq (M1 + 0.5 \times M2)/(L \times (1-p)) \leq 2\ g/\mu m$.

M1 is the mass of the lithium salt, in g; M2 is the mass of the second solvent, in g; L is the thickness of the positive electrode film layer on one side, in $\mu$m; and p is the porosity of the positive electrode film layer.

By satisfying the above relationship, the secondary battery of the present application can have good dynamic performance and high energy density.

In any embodiment, the thickness L of the positive electrode film layer on one side may be 80 $\mu$m to 140 $\mu$m, preferably 90 $\mu$m to 130 $\mu$m.

In any embodiment, the porosity p of the positive electrode film layer may be 20% to 50%, preferably 25% to 40%.

A third aspect of the present application provides a power consuming device, including the secondary battery of the second aspect. The power consuming device of the present application includes the secondary battery, and thus has all beneficial effects of the secondary battery.

## Invention effects

The present application can achieve both good dynamic performance and good high-temperature cycling performance, and enable a negative electrode of a battery to be fully protected.

Brief Description of the Drawings

FIG. 1 is a schematic diagram of a secondary battery according to an embodiment of the present application.

FIG. 2 is an exploded view of the secondary battery according to an embodiment of the present application as shown in FIG. 1.

FIG. 3 is a schematic diagram of a battery module according to an embodiment of the present application.

FIG. 4 is a schematic diagram of a battery pack according to an embodiment of the present application.

FIG. 5 is an exploded view of the battery pack according to an embodiment of the present application as shown in FIG. 4.

FIG. 6 is a schematic diagram of a power consuming device using a secondary battery according to an embodiment of the present application as a power supply.

List of reference signs:

1: battery pack; 2: upper box body; 3: lower box body; 4: battery module; 5: secondary battery; 51: housing; 52: electrode assembly; and 53: top cover assembly.

Detailed Description of Embodiments

Hereinafter, the embodiments of the electrolyte solution, secondary battery and power consuming device of the present application are specifically disclosed in the detailed description with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

"Ranges" disclosed in the present application are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60 to 120 and 80 to 110 are listed for a particular parameter, it should be understood that the ranges of 60 to 110 and 80 to 120 are also contemplated. Additionally, if minimum range values 1 and 2 are listed, and maximum range values 3, 4, and 5 are listed, the following ranges are all contemplated: 1 to 3, 1 to 4, 1 to 5, 2 to 3, 2 to 4 and 2 to 5. In the present application, unless stated otherwise, the numerical range "a to b" denotes an abbreviated representation of any combination of real numbers between a and b, where both a and b are real numbers. For example, the numerical range "0 to 5" means that all real numbers between "0 to 5" have been listed herein, and "0 to 5" is just an abbreviated representation of combinations of these numerical values. In addition, when a parameter is expressed as an integer of $\geq 2$, it is equivalent to disclosing that the parameter is, for example, an integer of 2, 3, 4, 5, 6, 7, 8, 9, 10, 11, 12, and the like.

All the embodiments and optional embodiments of the present application can be combined with one another to form new technical solutions, unless otherwise stated.

All technical features and optional technical features of the present application can be combined with one another to form a new technical solution, unless otherwise stated.

Unless otherwise stated, all the steps of the present application can be performed sequentially or randomly, preferably sequentially. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), steps (a), (c) and (b), and also steps (c), (a) and (b), etc.

The terms "comprise" and "include" mentioned in the present application are open-ended or closed-ended, unless otherwise stated. For example, the terms "comprising" and "including" may mean that other components not listed may also be comprised or included, or only the listed components may be comprised or included.

In the present application, the term "or" is inclusive unless otherwise specified. For example, the phrase "A or B" means "A, B, or both A and B." More specifically, a condition "A or B" is satisfied by any one of the following: A is true (or present) and B is false (or not present); A is false (or not present) and B is true (or present); or both A and B are true (or present).

The present application provides an electrolyte solution, a secondary battery including the electrolyte solution and a power consuming device including the secondary battery. The electrolyte solution, the secondary battery and the

power consuming device of the present application are described below in detail.

Electrolyte solution

In an embodiment of the present application, an electrolyte solution is provided, which contains a solvent, an additive and a lithium salt. The solvent includes a first solvent and a second solvent, the first solvent being a cyclic ester solvent, and the second solvent being a linear carboxylic ester solvent. The additive includes a film forming additive. Based on the total mass of the electrolyte solution, the lithium salt has a mass fraction of W1, the film forming additive has a mass fraction of W2, and the second solvent has a mass fraction of W3, which satisfy a relationship: $0.2 \leq (W1 + W2)/W3 \leq 0.4$.

Although the mechanism is not yet clear, the inventors of the present application have unexpectedly discovered that: by making the electrolyte solution satisfy the above relationship, both good dynamic performance and good high-temperature cycling performance of the battery can be achieved, and a negative electrode can be fully protected.

In the electrolyte solution of the present application, the cyclic ester solvent as the first solvent has a high dielectric constant and dissociates the lithium salt easily, thereby improving the electrical conductivity of the electrolyte solution. However, due to high viscosity of the cyclic ester solvent, the overall viscosity of the electrolyte solution is increased. In order to reduce the viscosity of the electrolyte solution, the linear carboxylic ester solvent as the second solvent is also used.

In the first formation process of the secondary battery, the film forming additive and the lithium salt in the electrolyte solution will undergo a reduction reaction at a negative electrode active site, to form an SEI film. The formation of the SEI film has a crucial impact on the performance of the secondary battery. The SEI film is insoluble in an organic solvent and can exist stably in the electrolyte solution to form a passive film. In addition, the solvent molecules cannot pass through the passive film, and thus co-intercalation of the solvent molecules can be effectively prevented to avoid damage to an electrode material caused by the co-intercalation of the solvent molecules, thereby greatly improving the high-temperature cycling performance and service life of the secondary battery.

However, the linear carboxylic ester solvent in the electrolyte solution is prone to a side reaction on an interface, which damages the SEI film of the negative electrode. Through meticulous research, the inventors of the present application have found that, by making the contents of the lithium salt, the film forming additive and the linear carboxylic ester solvent satisfy a specific relationship, namely, $0.2 \leq$ (mass fraction of lithium salt + mass fraction of film forming additive)/mass fraction of the second solvent $\leq 0.4$, the SEI film of the negative electrode has good stability, the negative electrode can be fully protected, the interface of the secondary battery has good stability, and the secondary battery has good high-temperature cycling performance. If the ratio is lower than the lower limit, the negative electrode is under inadequate protection, and thus the secondary battery has poor high-temperature cycling performance. If the ratio is higher than the upper limit, the SEI film is too thick, and the secondary battery has a large initial DCR.

In some embodiments, preferably, $0.25 \leq (W1 + W2)/W3 \leq 0.36$, more preferably $0.25 \leq (W1 + W2)/W3 \leq 0.35$, and further preferably $0.25 \leq (W1 + W2)/W3 \leq 0.30$. By satisfying the above relationship, the present application can further achieve both good dynamic performance and good high-temperature cycling performance, and enable a negative electrode to be fully protected.

In some embodiments, examples of the lithium salt may include $LiPF_6$, $LiBF_4$, LiFSI, LiTFSI, $LiCF_3SO_3$ and the like, preferably $LiPF_6$ and LiFSI. Based on the total mass of the electrolyte solution, the mass fraction W1 of the lithium salt may be 1% to 15%, preferably 6% to 15%, more preferably 6% to 12%, and still more preferably 6% to 10%. Through the use of the lithium salt, the present application can be helpful in forming an SEI film on a negative electrode, so as to protect the negative electrode. And, by setting the mass fraction of the lithium salt in the above range, it can be more helpful in forming an SEI film on a negative electrode, so as to protect the negative electrode.

In some embodiments, examples of the cyclic ester solvent may include ethylene carbonate, propylene carbonate, γ-butyrolactone, sulfolane and the like, preferably ethylene carbonate. Based on the total mass of the electrolyte solution, the mass fraction of the cyclic ester solvent may be 10% to 50%, preferably 20% to 40%, and more preferably 20% to 30%. By using the cyclic ester solvent, the present application can improve the electrical conductivity of the battery, thereby improving the dynamic performance of the battery. And, by setting the mass fraction of the cyclic ester solvent in the above range, the electrical conductivity of the battery can be further improved, thereby further improving the dynamic performance of the battery.

In some embodiments, examples of the linear carboxylic ester solvent may include methyl formate, ethyl formate, methyl acetate, ethyl acetate, propyl acetate, methyl acrylate, ethyl acrylate and the like. Based on the total mass of the electrolyte solution, the mass fraction W3 of the linear carboxylic ester solvent may be 30% to 70%, preferably 40% to 60%, and more preferably 40% to 50%. Through the use of the linear carboxylic ester solvent, the present application can reduce the viscosity of the electrolyte solution, thereby improving the dynamic performance of the battery. And, by setting the mass fraction of the linear carboxylic ester solvent in the above range, the viscosity of the electrolyte solution can be further reduced, thereby further improving the dynamic performance of the battery.

In some embodiments, in the electrolyte solution of the present application, in addition to the first solvent and the

second solvent, another solvent may also be added as a third solvent, and is, for example, dimethyl carbonate, ethyl methyl carbonate, diethyl carbonate and the like.

In some embodiments, examples of the film forming additive may include vinylene carbonate, vinyl ethylene carbonate, fluoroethylene carbonate and the like; and based on the total mass of the electrolyte solution, the mass fraction W2 of the film forming additive may be 1% to 10%, preferably 2% to 8%, and more preferably 4% to 6%. Through the use of the film forming additive, the present application can form an SEI film well on a negative electrode, so as to protect the negative electrode. And, by setting the mass fraction of the film forming additive in the above range, an SEI film can be fully formed on the negative electrode, so as to protect the negative electrode, without affecting the dynamic performance of the battery.

In some embodiments, the additive may also include a water removal additive shown by the following formula I.

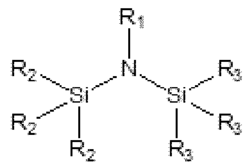

Formula I

where $R_1$ is a hydrogen atom, a lithium atom, a potassium atom, a sodium atom or a methyl group, and $R_2$ and $R_3$ are independently a C1 to C2 alkyl group or a C2 to C3 alkenyl group.

Examples of the water removal additive shown by the formula I may include hexamethyldisilazane, lithium bis(trimethylsilyl)amide (LiHMDS), sodium bis(trimethylsilyl)amide (NaHMDS), potassium bis(trimethylsilyl)amide (KHMDS), heptamethyldisilazane, 1,3-divinyl-1,1,3,3-tetramethyldisilazane and the like. Preferably, the water removal additive is hexamethyldisilazane.

Based on the total mass of the electrolyte solution, the mass fraction of the water removal solvent may be 0.5% or less, preferably 0.1% to 0.5%, and more preferably 0.2% to 0.4%. By containing the water removal additive in the electrolyte solution, it can be helpful in removing water in the electrolyte solution, thereby improving the adverse effects caused by the water in the electrolyte solution. And, by setting the mass fraction of the water removal additive in the above range, water in the electrolyte solution can be removed more effectively, thereby further improving the adverse effects caused by the water in the electrolyte solution. In addition, the water removal additive will also participate in the formation of the SEI film of the negative electrode, thereby improving the thermal stability of the SEI film.

In some embodiments, in the electrolyte solution of the present application, in addition to the above additives, an additive capable of improving certain performance of the battery may also be included, and is, for example, an additive for improving the overcharging performance of the battery, an additive for improving the high-temperature or low-temperature performance of the battery, etc.

Secondary battery

A second aspect of the present application provides a secondary battery, including the above electrolyte solution. The secondary battery of the present application can achieve both good dynamic performance and good high-temperature cycling performance, and enable a negative electrode to be fully protected.

The secondary battery of the present application can be a lithium-ion secondary battery and the like. Typically, the secondary battery includes a positive electrode plate, a negative electrode plate, an electrolyte solution and a separator. During the charge/discharge process of the battery, active ions are intercalated and de-intercalated back and forth between the positive electrode plate and the negative electrode plate. The electrolyte solution functions for ionic conduction between the positive electrode plate and the negative electrode plate. The separator is provided between the positive electrode plate and the negative electrode plate, and mainly prevents the positive and negative electrodes from short circuiting while enabling ions to pass through.

[Positive electrode plate]

The positive electrode plate may include a substrate (namely, positive electrode current collector) and a positive electrode film layer provided on at least one side surface of the substrate, the positive electrode film layer containing a positive electrode active material. The positive electrode active material may include a lithium-containing phosphate of an olivine structure.

As an example, the positive electrode current collector has two surfaces opposite in its own thickness direction,

and the positive electrode film layer is provided on either or both of the two opposite surfaces of the positive electrode current collector.

The positive electrode current collector may be a metal foil or a composite current collector. For example, as a metal foil, an aluminum foil may be used. The composite current collector may include a polymer material substrate and a metal layer formed on at least one surface of the polymer material substrate. The composite current collector can be formed by forming a metal material (aluminum, an aluminum alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

The positive electrode active material may include a lithium-containing phosphate of an olivine structure, thereby improving the cycle life of the battery. In addition, the positive electrode active material may also include a lithium transition metal oxide and a modified compound thereof. However, the present application is not limited to these materials, and other conventional materials that can be used as positive electrode active materials for batteries may also be used. These positive electrode active materials may be used alone or in combination of two or more. Herein, examples of the lithium-containing phosphate of an olivine structure may include, but are not limited to, at least one of lithium iron phosphate (e.g., $LiFePO_4$ (also referred to as LFP)), lithium iron phosphate and carbon composites, lithium manganese phosphate (e.g., $LiMnPO_4$), lithium manganese phosphate and carbon composites, lithium iron manganese phosphate, and lithium iron manganese phosphate and carbon composites. Examples of the lithium transition metal oxide may include, but are not limited to, at least one of lithium cobalt oxide (e.g., $LiCoO_2$), lithium nickel oxide (e.g., $LiNiO_2$), lithium manganese oxide (e.g., $LiMnO_2$, $LiMn_2O_4$), lithium nickel cobalt oxide, lithium manganese cobalt oxide, lithium nickel manganese oxide, lithium nickel cobalt manganese oxide (e.g., $LiNi_{1/3}Co_{1/3}Mn_{1/3}O_2$ (also referred to as $NCM_{333}$)), $LiNi_{0.5}Co_{0.2}Mn_{0.3}O_2$ (also referred to as $NCM_{523}$), $LiNi_{0.3}Co_{0.23}Mn_{0.23}O_2$ (also referred to as $NCM_{211}$), $LiNi_{0.6}Co_{0.2}Mn_{0.2}O_2$ (also referred to as $NCM_{622}$), $LiNi_{0.8}Co_{0.1}Mn_{0.1}O_2$ (also referred to as $NCM_{811}$)), lithium nickel cobalt aluminum oxide (e.g., $LiNi_{0.85}Co_{0.15}Al_{0.05}O_2$), and modified compounds thereof, and the like.

The positive electrode film layer may also optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

The positive electrode film layer may also optionally include a conductive agent. As an example, the conductive agent may include at least one of superconducting carbon, acetylene black, carbon black, Ketjen black, carbon dots, carbon nanotubes, graphene, and carbon nanofibers.

In some embodiments, the thickness of the positive electrode film layer on one side may be 80 μm to 140 μm, preferably 90 μm to 130 μm.

In some embodiments, the porosity p of the positive electrode film layer may be 20% to 50%, preferably 25% to 40%.

The thickness of the positive electrode film layer on one side and the porosity p of the positive electrode film layer can be adjusted by controlling a coating weight and a cold-pressing procedure.

In some embodiments, the positive electrode plate can be prepared as follows: dispersing the above-mentioned components for preparing a positive electrode plate, such as the positive electrode active material, the conductive agent, the binder and any other components, in a solvent (e.g. N-methylpyrrolidone) to form a positive electrode slurry; and coating a positive electrode current collector with the positive electrode slurry, followed by procedures such as drying and cold pressing, to obtain the positive electrode plate.

[Negative electrode plate]

The negative electrode plate includes a negative electrode current collector and a negative electrode film layer provided on at least one surface of the negative electrode current collector, the negative electrode film layer including a negative electrode active material.

As an example, the negative electrode current collector has two surfaces opposite in its own thickness direction, and the negative electrode film layer is provided on either or both of the two opposite surfaces of the negative electrode current collector.

The negative electrode current collector may be a metal foil or a composite current collector. For example, as a metal foil, a copper foil may be used. The composite current collector may include a polymer material substrate and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

The negative electrode active material may be a negative electrode active material well known in the art for batteries. As an example, the negative electrode active material may include at least one of the following materials: artificial

graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites and silicon alloys. The tin-based material may be selected from at least one of elemental tin, tin oxides and tin alloys. However, the present application is not limited to these materials, and other conventional materials that can be used as negative electrode active materials for batteries may also be used. These negative electrode active materials may be used alone or in combination of two or more.

The negative electrode film layer may also optionally include a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

The negative electrode film layer may also optionally include a conductive agent. The conductive agent may be selected from at least one of superconducting carbon, acetylene black, carbon black, ketjenblack, carbon dots, carbon nanotubes, graphene, and carbon nanofibers.

The negative electrode film layer may also optionally include other auxiliaries, such as a thickening agent (e.g., sodium carboxymethyl cellulose CMC-Na).

In some embodiments, the negative electrode plate can be prepared as follows: dispersing the above-mentioned components for preparing a negative electrode plate, such as the negative electrode active material, the conductive agent, the binder and any other components, in a solvent (e.g. deionized water) to form a negative electrode slurry; and coating a negative electrode current collector with the negative electrode slurry, followed by procedures such as drying and cold pressing, to obtain the negative electrode plate.

[Electrolyte solution]

The electrolyte solution functions for ionic conduction between the positive electrode plate and the negative electrode plate. The electrolyte solution is one described in the above-mentioned subject item of "electrolyte solution".

[Separator]

In some embodiments, the secondary battery also includes a separator. The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be a single-layer film, or a multi-layer composite film, which is not limited particularly. When the separator is a multi-layer composite film, the materials in respective layers may be the same or different, which is not limited particularly.

[Secondary battery]

In some embodiments, the positive electrode plate, the negative electrode plate and the separator can form an electrode assembly by a winding process or a lamination process.

In some embodiments, the secondary battery may include an outer package. The outer package can be used to encapsulate the above-mentioned electrode assembly and electrolyte.

In some embodiments, the outer package of the secondary battery may be a hard shell, such as a hard plastic shell, an aluminum shell, or a steel shell. The outer package of the secondary battery may also be a soft bag, such as a pouch-type soft bag. The material of the soft bag may be plastics, and examples of the plastics may include polypropylene, polybutylene terephthalate, and polybutylene succinate, etc.

The shape of the secondary battery is not particularly limited in the present application, and may be cylindrical, square or of any other shape. For example, FIG. 1 shows a secondary battery 5 with a square structure as an example.

In some embodiments, referring to FIG. 2, the outer package may include a housing 51 and a cover plate 53. Herein, the housing 51 may include a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate and the separator can form an electrode assembly 52 by a winding process or a lamination process. The electrode assembly 52 is encapsulated in the accommodating cavity. The electrolyte solution is infiltrated into the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

FIG. 3 shows a battery module 4 as an example. Referring to FIG. 3, in the battery module 4, a plurality of secondary batteries 5 may be arranged in sequence in the length direction of the battery module 4. Apparently, the secondary batteries may also be arranged in any other manner. Furthermore, the plurality of secondary batteries 5 may be fixed by fasteners.

Optionally, the battery module 4 may also include a housing with an accommodating space, and a plurality of secondary batteries 5 are accommodated in the accommodating space.

In some embodiments, the above battery module can also be assembled into a battery pack, the number of the battery modules contained in the battery pack may be one or more, and the specific number can be selected by those skilled in the art according to the application and capacity of the battery pack.

FIG. 4 and FIG. 5 show a battery pack 1 as an example. Referring to FIG. 4 and FIG. 5, the battery pack 1 may include a battery box and a plurality of battery modules 4 provided in the battery box. The battery box includes an upper box body 2 and a lower box body 3, where the upper box body 2 can cover the lower box body 3 to form a closed space for accommodating the battery modules 4. A plurality of battery modules 4 may be arranged in the battery box in any manner.

In some embodiments, the secondary battery of the present application can satisfy $1\ g/\mu m \leq (M1 + 0.5 \times M2)/(L \times (1\text{-}p)) \leq 3\ g/\mu m$, preferably, $1\ g/\mu m \leq (M1 + 0.5 \times M2)/(L \times (1\text{-}p)) \leq 2\ g/\mu m$, and more preferably, $1.4\ g/\mu m \leq (M1 + 0.5 \times M2)/(L \times (1\text{-}p)) \leq 2\ g/\mu m$, where M1 is the mass of the lithium salt, in g; M2 is the mass of the second solvent, in g; L is the thickness of the positive electrode film layer on one side, in μm; and p is the porosity of the positive electrode film layer. As long as the above relationship is satisfied, M1, M2, L and p can be selected as appropriate, and any combination of the numerical ranges of M1, M2, L and p may be included.

The secondary battery in use will undergo repeated charges and discharges, and each charge/discharge is accompanied by the deintercalation/intercalation of lithium ions from the positive and negative electrodes and the migration of lithium ions in the solvents of the electrolyte solution. In order to accelerate this process, the inventors of the present application have found that, the deintercalation/intercalation of the lithium ions can be facilitated by adjusting the amount of the second solvent to increase the migration rate of the lithium ions in the solvents of the electrolyte solution and by adjusting the amount of the lithium salt to increase the concentration of lithium ions on the surfaces of the positive and negative electrodes. By means of the two measures, the dynamic performance of the lithium-ion battery can be effectively improved. On the other hand, in order to improve the energy density, the coating thickness of the positive electrode plate is increased, the compacted density is increased, and the porosity is reduced. However, the thicker positive electrode plate and the smaller porosity lead to higher requirements on the dynamic performance of the electrolyte solution. By adjusting the parameters of the electrolyte solution and the positive electrode plate, the inventors of the present application have found that, when the above-mentioned $(M1 + 0.5 \times M2)/(L \times (1\text{-}p))$ is adjusted to a proper range, the secondary battery can have good dynamic performance and high energy density.

## Power consuming device

A third aspect of the present application provides a power consuming device, including the above-mentioned secondary battery. The power consuming device of the present application includes the secondary battery, and thus has all beneficial effects of the secondary battery.

The secondary battery can be used as a power supply of the power consuming device, and can also be used as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship, and satellite, an energy storage system, and the like, but is not limited thereto.

For the power consuming device, the secondary battery, battery module or battery pack can be selected according to the usage requirements thereof.

FIG. 6 shows a power consuming device as an example. The power consuming device may be a pure electric vehicle, a hybrid electric vehicle, a plug-in hybrid electric vehicle or the like. In order to meet the requirements of the power consuming device for a high power and a high energy density of a secondary battery, a battery pack or a battery module may be used.

As another example, the device may be a mobile phone, a tablet computer, a laptop computer, etc. The device is generally required to be thin and light, and may use the secondary battery as a power supply.

## Examples

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product introduction. The reagents or instruments used therein for

which manufacturers are not specified are all conventional products that are commercially available.

Example 1

Preparation of positive electrode plate:

A positive electrode active material lithium iron phosphate of an olivine structure, a conductive agent carbon black (Super P) and a binder polyvinylidene fluoride (PVDF) in a ratio of 97 : 1 : 2 were dispersed in a solvent N-methylpyrrolidone to form a positive electrode slurry; and the positive electrode slurry was coated on two surfaces of a positive electrode current collector, an aluminum foil, followed by drying, cold pressing and slitting and cutting, to obtain a positive electrode plate. The positive electrode film layer on one side has a thickness of 104 μm and the positive electrode film layer has a porosity of 30%.

Preparation of negative electrode plate:

A negative electrode active material graphite, a conductive agent carbon black (Super P), a binder styrene butadiene rubber (SBR) and a dispersant carboxymethyl cellulose in a ratio of 97 : 0.5 : 1.5 : 1 were dispersed in a solvent water to form a negative electrode slurry; and the negative electrode slurry was coated on two surfaces of a negative electrode current collector, a copper foil, followed by drying, cold pressing and slitting and cutting, to obtain a negative electrode plate.

Separator:

A polyethylene film was used as a separator.

Preparation of electrolyte solution:

In an argon atmosphere glovebox, based on the mass percent of the total mass of the electrolyte solution, 54% of ethyl acetate and 30% of ethylene carbonate were mixed to obtain an organic solvent mixture; and then 10% of lithium hexafluorophosphate $LiPF_6$ based on the mass percent of the total mass of the electrolyte solution was added slowly as an electrolyte salt. Then, stirring was performed till complete dissolution. The solution was allowed to stand still for cooling, and after the solution returned to room temperature, 6% of vinylene carbonate based on the mass percent of the total mass of the electrolyte solution was added to the solution and stirring was performed till complete dissolution, to obtain 310 g of an electrolyte solution.

Preparation of lithium-ion secondary battery:

The positive electrode plate, the negative electrode plate and the separator were made into an electrode assembly by a winding process or a lamination process, the electrode assembly was put into a housing composed of an aluminum shell, an aluminum plastic film and the like, and the electrolyte solution was injected, followed by high-temperature standing, formation and capacity grading, to obtain a battery of Example 1.

Example 2

Preparation of electrolyte solution:

In an argon atmosphere glovebox, based on the mass percent of the total mass of the electrolyte solution, 58% of ethyl acetate and 30% of ethylene carbonate were mixed to obtain an organic solvent mixture; and then 6% of lithium hexafluorophosphate $LiPF_6$ based on the mass percent of the total mass of the electrolyte solution was added slowly as an electrolyte salt. Then, stirring was performed till complete dissolution. The solution was allowed to stand still for cooling, and after the solution returned to room temperature, 6% of vinylene carbonate based on the mass percent of the total mass of the electrolyte solution was added to the solution and stirring was performed till complete dissolution, to obtain 310 g of an electrolyte solution.

Other operations were the same as those in Example 1, to obtain a battery of Example 2.

Example 3

Preparation of electrolyte solution:

In an argon atmosphere glovebox, based on the mass percent of the total mass of the electrolyte solution, 44% of ethyl acetate and 40% of ethylene carbonate were mixed to obtain an organic solvent mixture; and then 10% of lithium hexafluorophosphate $LiPF_6$ based on the mass percent of the total mass of the electrolyte solution was added slowly as an electrolyte salt. Then, stirring was performed till complete dissolution. The solution was allowed to stand still for cooling, and after the solution returned to room temperature, 6% of vinylene carbonate based on the mass percent of the total mass of the electrolyte solution was added to the solution and stirring was performed till complete dissolution, to obtain 310 g of an electrolyte solution.

Other operations were the same as those in Example 1, to obtain a battery of Example 3.

Example 4

Preparation of electrolyte solution:

In an argon atmosphere glovebox, based on the mass percent of the total mass of the electrolyte solution, 56% of ethyl acetate and 30% of ethylene carbonate were mixed to obtain an organic solvent mixture; and then 10% of lithium hexafluorophosphate $LiPF_6$ based on the mass percent of the total mass of the electrolyte solution was added slowly as an electrolyte salt. Then, stirring was performed till complete dissolution. The solution was allowed to stand still for cooling, and after the solution returned to room temperature, 4% of vinylene carbonate based on the mass percent of the total mass of the electrolyte solution was added to the solution and stirring was performed till complete dissolution, to obtain 310 g of an electrolyte solution.

Other operations were the same as those in Example 1, to obtain a battery of Example 4.

Example 5

Preparation of electrolyte solution:

In an argon atmosphere glovebox, based on the mass percent of the total mass of the electrolyte solution, 50% of ethyl acetate and 30% of ethylene carbonate were mixed to obtain an organic solvent mixture; and then 10% of lithium hexafluorophosphate $LiPF_6$ based on the mass percent of the total mass of the electrolyte solution was added slowly as an electrolyte salt. Then, stirring was performed till complete dissolution. The solution was allowed to stand still for cooling, and after the solution returned to room temperature, 10% of vinylene carbonate based on the mass percent of the total mass of the electrolyte solution was added to the solution and stirring was performed till complete dissolution, to obtain 310 g of an electrolyte solution.

Other operations were the same as those in Example 1, to obtain a battery of Example 5.

Example 6

Preparation of electrolyte solution:

In an argon atmosphere glovebox, based on the mass percent of the total mass of the electrolyte solution, 49% of ethyl formate and 35% of propylene carbonate were mixed to obtain an organic solvent mixture; and then 10% of $LiBF_4$ based on the mass percent of the total mass of the electrolyte solution was added slowly as an electrolyte salt. Then, stirring was performed till complete dissolution. The solution was allowed to stand still for cooling, and after the solution returned to room temperature, 6% of vinyl ethylene carbonate based on the mass percent of the total mass of the electrolyte solution was added to the solution and stirring was performed till complete dissolution, to obtain 310 g of an electrolyte solution.

Other operations were the same as those in Example 1, to obtain a battery of Example 6.

Example 7

Preparation of electrolyte solution:

In an argon atmosphere glovebox, based on the mass percent of the total mass of the electrolyte solution, 49% of methyl formate and 35% of $\gamma$-butyrolactone were mixed to obtain an organic solvent mixture; and then 10% of LiFSI based on the mass percent of the total mass of the electrolyte solution was added slowly as an electrolyte salt. Then, stirring was performed till complete dissolution. The solution was allowed to stand still for cooling, and after the solution returned to

room temperature, 6% of fluoroethylene carbonate based on the mass percent of the total mass of the electrolyte solution was added to the solution and stirring was performed till complete dissolution, to obtain 310 g of an electrolyte solution.

Other operations were the same as those in Example 1, to obtain a battery of Example 7.

Example 8

Preparation of electrolyte solution:

In an argon atmosphere glovebox, based on the mass percent of the total mass of the electrolyte solution, 49% of methyl acetate and 35% of sulfolane were mixed to obtain an organic solvent mixture; and then 10% of LiTFSI based on the mass percent of the total mass of the electrolyte solution was added slowly as an electrolyte salt. Then, stirring was performed till complete dissolution. The solution was allowed to stand still for cooling, and after the solution returned to room temperature, 6% of fluoroethylene carbonate based on the mass percent of the total mass of the electrolyte solution was added to the solution and stirring was performed till complete dissolution, to obtain 310 g of an electrolyte solution.

Other operations were the same as those in Example 1, to obtain a battery of Example 8.

Example 9

Preparation of electrolyte solution:

In an argon atmosphere glovebox, based on the mass percent of the total mass of the electrolyte solution, 44% of ethyl acetate, 30% of ethylene carbonate and 10% of dimethyl carbonate were mixed to obtain an organic solvent mixture; and then 10% of lithium hexafluorophosphate $LiPF_6$ based on the mass percent of the total mass of the electrolyte solution was added slowly as an electrolyte salt. Then, stirring was performed till complete dissolution. The solution was allowed to stand still for cooling, and after the solution returned to room temperature, 6% of vinylene carbonate based on the mass percent of the total mass of the electrolyte solution was added to the solution and stirring was performed till complete dissolution, to obtain 310 g of an electrolyte solution.

Other operations were the same as those in Example 1, to obtain a battery of Example 9.

Example 10

Preparation of electrolyte solution:

In an argon atmosphere glovebox, based on the mass percent of the total mass of the electrolyte solution, 53.5% of ethyl acetate and 30% of ethylene carbonate were mixed to obtain an organic solvent mixture; and then 10% of lithium hexafluorophosphate $LiPF_6$ based on the mass percent of the total mass of the electrolyte solution was added slowly as an electrolyte salt. Then, stirring was performed till complete dissolution. The solution was allowed to stand still for cooling, and after the solution returned to room temperature, 6% of vinylene carbonate and 0.5% of hexamethyldisilazane based on the mass percent of the total mass of the electrolyte solution were added to the solution and stirring was performed till complete dissolution, to obtain 310 g of an electrolyte solution.

Other operations were the same as those in Example 1, to obtain a battery of Example 10.

Comparative Example 1

Preparation of electrolyte solution:

In an argon atmosphere glovebox, based on the mass percent of the total mass of the electrolyte solution, 68% of ethyl acetate and 20% of ethylene carbonate were mixed to obtain an organic solvent mixture; and then 6% of lithium hexafluorophosphate $LiPF_6$ based on the mass percent of the total mass of the electrolyte solution was added slowly as an electrolyte salt. Then, stirring was performed till complete dissolution. The solution was allowed to stand still for cooling, and after the solution returned to room temperature, 6% of vinylene carbonate based on the mass percent of the total mass of the electrolyte solution was added to the solution and stirring was performed till complete dissolution, to obtain 310 g of an electrolyte solution.

Other operations were the same as those in Example 1, to obtain a battery of Comparative example 1.

Comparative example 2

Preparation of electrolyte solution:

In an argon atmosphere glovebox, based on the mass percent of the total mass of the electrolyte solution, 34% of ethyl acetate and 50% of ethylene carbonate were mixed to obtain an organic solvent mixture; and then 10% of lithium hexafluorophosphate $LiPF_6$ based on the mass percent of the total mass of the electrolyte solution was added slowly as an electrolyte salt. Then, stirring was performed till complete dissolution. The solution was allowed to stand still for cooling, and after the solution returned to room temperature, 6% of vinylene carbonate based on the mass percent of the total mass of the electrolyte solution was added to the solution and stirring was performed till complete dissolution, to obtain 310 g of an electrolyte solution.

Other operations were the same as those in Example 1, to obtain a battery of Comparative example 2.

With respect to the relationship (W1 + W2)/W3 involved in the present application, relevant parameters of the above Examples 1 to 10 and Comparative examples 1 to 2 are shown in Table 1 below.

Table 1

| Example/Comparative example | Solvent | | | | | | Additive | | | | Lithium salt | | (W1+W2)/ W3 | Battery performance | |
|---|---|---|---|---|---|---|---|---|---|---|---|---|---|---|---|
| | Type | | | Content | | | Type | | Content | | Type | Content (W1) | | Initial DCR (mOhm) | Capacity retention rate after 1,000 cycles at 60°C |
| | First solvent | Second solvent | Third solvent | First solvent | Second solvent (W3) | Third solvent | Film forming additive | Water removal additive | Film forming additive (W2) | Water removal additive | | | | | |
| Example 1 | Ethylene carbonate | Ethyl acetate | - | 30 % | 54% | - | Vinylene carbonate | - | 6% | - | $LiPF_6$ | 10% | 0.30 | 1.5 | 81.2% |
| Example 2 | Ethylene carbonate | Ethyl acetate | - | 30 % | 58% | - | Vinylene carbonate | - | 6% | - | $LiPF_6$ | 6% | 0.21 | 1.6 | 80.0% |
| Example 3 | Ethylene carbonate | Ethyl acetate | - | 40 % | 44% | - | Vinylene carbonate | - | 6% | - | $LiPF_6$ | 10% | 0.36 | 1.7 | 82.0% |
| Example 4 | Ethylene carbonate | Ethyl acetate | - | 30 % | 56% | - | Vinylene carbonate | - | 4% | - | $LiPF_6$ | 10% | 0.25 | 1.4 | 80.2% |
| Example 5 | Ethylene carbonate | Ethyl acetate | - | 30 % | 50% | - | Vinylene carbonate | - | 10% | - | $LiPF_6$ | 10% | 0.40 | 2.0 | 82.5% |
| Example 6 | Propylene carbonate | Ethyl formate | - | 35 % | 49% | - | Vinyl ethylene carbonate | - | 6% | - | $LiBF_4$ | 10% | 0.33 | 1.4 | 78.6% |
| Example 7 | γ-butyrolactone | Methyl formate | - | 35 % | 49% | - | Fluoroethylene carbonate | - | 6% | - | LiFSI | 10% | 0.33 | 1.2 | 79.0% |
| Example 8 | Sulfolane | Methyl acetate | - | 35 % | 49% | - | Fluoroethyl ene carbonate | - | 6% | - | LiTFSI | 10% | 0.33 | 1.3 | 79.3% |
| Example 9 | Ethylene carbonate | Ethyl acetate | Dimethyl carbonate | 30 % | 44% | 10% | Vinylene carbonate | - | 6% | - | $LiPF_6$ | 10% | 0.36 | 1.8 | 81.9% |
| Example 10 | Ethylene carbonate | Ethyl acetate | - | 30 % | 53.5 % | - | Vinylene carbonate | Hexamethyl disilazane | 6% | 0.5% | $LiPF_6$ | 10% | 0.30 | 1.5 | 82.0% |
| Comparative Example 1 | Ethylene carbonate | Ethyl acetate | - | 20 % | 68% | - | Vinylene carbonate | - | 6% | - | $LiPF_6$ | 6% | 0.18 | 1.7 | 72.3% |
| Comparative example 2 | Ethylene carbonate | Ethyl acetate | - | 50 % | 34% | - | Vinylene carbonate | - | 6% | - | $LiPF_6$ | 10% | 0.47 | 4.0 | 85.0% |

Example 11

A battery of Example 11 was obtained in the same manner as in Example 1, except that the thickness of the positive electrode film layer on one side was 102 μm, the porosity of the positive electrode film layer was 50%, and the injection amount was 256 g.

Example 12

A battery of Example 12 was obtained in the same manner as in Example 2, except that the thickness of the positive electrode film layer on one side was 119 μm, the porosity of the positive electrode film layer was 30%, the injection amount was 300 g and, in the preparation of the electrolyte solution, 43% of ethyl acetate and 45% of ethylene carbonate based on the mass percent of the total mass of the electrolyte solution were mixed to obtain an organic solvent mixture.

Example 13

A battery of Example 13 was obtained in the same manner as in Example 1, except that the thickness of the positive electrode film layer on one side was 87 μm, the porosity of the positive electrode film layer was 50%, the injection amount was 290 g and, in the preparation of the electrolyte solution, 69% of ethyl acetate and 15% of ethylene carbonate based on the mass percent of the total mass of the electrolyte solution were mixed to obtain an organic solvent mixture.

With respect to the relationship (M1 + 0.5 × M2)/(L × (1-p)) involved in the present application, relevant parameters of the above Examples 11, 12 and 13 and above Examples 1 to 10 are shown in Table 2 below.

Table 2

| Example/ Comparative example | Mass M1 of lithium salt (g) | Mass M2 of second solvent (g) | Thickness L of positive electrode film layer on one side (μm) | Porosity p of positive electrode film layer (%) | (M1 + 0.5 × M2)/ (L × (1-p)) (g/μm) | Initial DCR (mOhm) | Energy density (Wh/kg) |
|---|---|---|---|---|---|---|---|
| Example 1 | 31 | 167.4 | 104 | 30% | 1.6 | 1.5 | 175 |
| Example 2 | 18.6 | 179.8 | 104 | 30% | 1.5 | 1.6 | 177 |
| Example 3 | 31 | 136.4 | 104 | 30% | 1.4 | 1.7 | 178 |
| Example 4 | 31 | 173.6 | 104 | 30% | 1.6 | 1.4 | 175 |
| Example 5 | 31 | 155 | 104 | 30% | 1.5 | 2.0 | 177 |
| Example 6 | 31 | 151.9 | 104 | 30% | 1.5 | 1.4 | 177 |
| Example 7 | 31 | 151.9 | 104 | 30% | 1.5 | 1.2 | 177 |
| Example 8 | 31 | 151.9 | 104 | 30% | 1.5 | 1.3 | 177 |
| Example 9 | 31 | 136.4 | 104 | 30% | 1.4 | 1.8 | 178 |
| Example 10 | 31 | 165.9 | 104 | 30% | 1.6 | 1.5 | 175 |
| Example 11 | 25.6 | 138.2 | 102 | 50% | 1.9 | 1.3 | 171 |
| Example 12 | 18 | 129 | 119 | 30% | 1.0 | 6.0 | 190 |
| Example 13 | 29 | 200.1 | 87 | 50% | 3.0 | 1.1 | 156 |

Determination methods are described below.

(1) Determination of initial direct current resistance (DCR)

At room temperature, each of the batteries in the examples and comparative examples was charged to 3.65 V with a constant current at 0.5C, and then charged with a constant voltage to a current at 0.05C; the battery was discharged for 30 min with a constant current at 0.5C, to adjust the battery to 50% SOC, and the voltage of the battery at this moment was recorded as U1; and the battery was discharged for 30 sec with a constant current at 4C, point sampling of 0.1 sec was performed, and the voltage at the end of the discharge was recorded as U2. The discharge DCR at 50% SOC of the battery was used to represent the initial DCR of the battery, and the initial DCR of the battery = (U1-U2)/4C.

(2) Determination of high-temperature cycling performance at 60°C

At 60°C, each of the batteries in the examples and comparative examples was charged to 3.65 V with a constant current at 0.5C, and then charged with a constant voltage to a current at 0.05C; the battery was allowed to stand still for 5 min, and discharged to 2.5 V with a constant current at 1/3C, which was the first charge-discharge cycle process of the battery, and the discharge capacity at this moment was recorded as the discharge capacity of the battery for the first cycle. The battery was subjected to 1,000 charge and discharge cycle processes according to the above-mentioned method, and the discharge capacity of the battery after 1,000 cycles was recorded. Capacity retention rate (%) of the battery after 1,000 cycles at 60°C = (Discharge capacity of the battery after 1,000 cycles/Discharge capacity of the battery for the first cycle) × 100%.

(3) Determination of energy density

A mass M of each of the batteries in the examples and comparative examples was weighed, the rated capacity C and average discharge voltage U of the battery were obtained, and the energy density was calculated by using Energy density = C × U/M.

(4) Determination of thickness L of positive electrode film layer

The thickness T1 of the positive electrode plate and the thickness T2 of the positive electrode substrate were measured with a spiral micrometer. If the plate was singleside coated, the thickness of the film layer was T1-T2; and if the plate was double-layer coated, the thickness of the film plate was (T1-T2)/2.

(5) Porosity p of positive electrode film layer

The measurement was carried out by referring to the method of GB/T 24586-2009.

It can be seen from the above results that, with satisfying a range of (W1 + W2)/W3 specified in the present application, namely, a range of (W1 + W2)/W3 from 0.2 to 0.4, the batteries of Examples 1 to 10 can achieve both good dynamic performance and good high-temperature cycling performance and enable a negative electrode to be fully protected, thereby obtaining a good effect.

By contrast, without satisfying the range of (W1 + W2)/W3 specified in the present application, the batteries of Comparative examples 1 and 2 cannot achieve both good dynamic performance and good high-temperature cycling performance and cannot enable a negative electrode to be fully protected, thereby obtaining a worse effect than those of Examples 1 to 10.

In addition, with satisfying a range of (M1 + 0.5 × M2)/(L × (1-p)) specified in the present application, namely, a range of (M1 + 0.5 × M2)/(L × (1-p)) from 1 to 3 g/μm, the batteries of Examples 1 to 10 and Examples 11 to 13 achieve both good dynamic performance and high energy density, thereby obtaining a good effect.

It should be noted that the present application is not limited to the above embodiments. The above embodiments are exemplary only, and any embodiment that has substantially same constitutions as the technical ideas and has the same effects within the scope of the technical solution of the present application falls within the technical scope of the present application. In addition, without departing from the gist of the present application, various modifications that can be conceived by those skilled in the art to the embodiments, and other modes constructed by combining some of the constituent elements of the embodiments also fall within the scope of the present application.

## Claims

**1.** A secondary battery (5), comprising a positive electrode plate and an electrolyte solution,

wherein the positive electrode plate comprises a substrate and a positive electrode film layer provided on at least one side surface of the substrate, the positive electrode film layer containing a positive electrode active material, and the positive electrode active material comprising a lithium-containing phosphate of an olivine structure;
wherein the electrolyte solution contains a solvent, an additive and a lithium salt, wherein
the solvent comprises a first solvent and a second solvent,
the first solvent being a cyclic ester solvent,
the second solvent being a linear carboxylic ester solvent,
the additive comprises a film forming additive, and
based on the total mass of the electrolyte solution, the lithium salt has a mass fraction of W1, the film forming

additive has a mass fraction of W2, and the second solvent has a mass fraction of W3, which satisfy the following relationship:

$$0.2 \leq (W1 + W2)/W3 \leq 0.4;$$

**characterized in that** the secondary battery (5) satisfies 1g/$\mu$m $\leq$ (M1 + 0.5 $\times$ M2)/(L $\times$ (1-p)) $\leq$ 3g/$\mu$m; wherein
M1 is the mass of the lithium salt, in g,
M2 is the mass of the second solvent, in g,
L is the thickness of the positive electrode film layer on one side, in $\mu$m, and
p is the porosity of the positive electrode film layer, wherein p is determined according to GB/T 24586-2009.

**2.** The secondary battery (5) according to claim 1, wherein 0.25 $\leq$ (W1 + W2)/W3 $\leq$ 0.36; and/or the cyclic ester solvent is at least one selected from ethylene carbonate, propylene carbonate, $\gamma$-butyrolactone and sulfolane.

**3.** The secondary battery (5) according to claim 1 or claim 2, wherein the linear carboxylic ester solvent is at least one selected from methyl formate, ethyl formate, methyl acetate, ethyl acetate, propyl acetate, methyl acrylate and ethyl acrylate.

**4.** The secondary battery (5) according to any one of claims 1 to 3, wherein the film forming additive is at least one selected from vinylene carbonate, vinyl ethylene carbonate and fluoroethylene carbonate.

**5.** The secondary battery (5) according to any one of claims 1 to 4, wherein the lithium salt is at least one selected from $LiPF_6$, $LiBF_4$, LiFSI, LiTFSI and $LiCF_3SO_3$.

**6.** The secondary battery (5) according to any one of claims 1 to 5, wherein, based on the total mass of the electrolyte solution, the mass fraction W1 of the lithium salt is 1% to 15%, optionally 6% to 15%.

**7.** The secondary battery (5) according to any one of claims 1 to 6, wherein, based on the total mass of the electrolyte solution, the mass fraction W2 of the film forming additive is 1% to 10%, optionally 2% to 8%.

**8.** The secondary battery (5) according to any one of claims 1 to 7, wherein, based on the total mass of the electrolyte solution, the mass fraction W3 of the second solvent is 30% to 70%, optionally 40% to 60%; optionally based on the total mass of the electrolyte solution, the mass fraction of the first solvent is 10% to 50%, optionally 20% to 40%.

**9.** The secondary battery (5) according to any one of claims 1 to 8, wherein the additive further comprises a water removal additive shown by the following formula I,

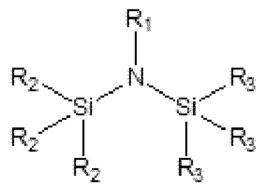

Formula I

where $R_1$ is a hydrogen atom, a lithium atom, a potassium atom, a sodium atom or a methyl group, and $R_2$ and $R_3$ are independently a C1 to C2 alkyl group or a C2 to C3 alkenyl group.

**10.** The secondary battery (5) according to claim 9, wherein the water removal additive is at least one selected from hexamethyldisilazane, lithium bis(trimethylsilyl)amide (LiHMDS), sodium bis(trimethylsilyl)amide (NaHMDS), potassium bis(trimethylsilyl)amide (KHMDS), heptamethyldisilazane and 1,3-divinyl-1,1,3,3-tetramethyldisilazane; and/or based on the total mass of the electrolyte solution, the mass fraction of the water removal additive is 0.5% or less, optionally 0.1% to 0.5%.

**11.** The secondary battery (5) according to any one of the claims 1 - 10, wherein the secondary battery (5) satisfies 1g/$\mu$m $\leq$ (M1 + 0.5 $\times$ M2)/(L $\times$ (1-p)) $\leq$ 2g/$\mu$m.

12. The secondary battery (5) according to any one of the claims 1 - 11, wherein the thickness L of the positive electrode film layer on one side is 80 μm to 140 μm, optionally 90 μm to 130 μm.

13. The secondary battery (5) according to any one of the claims 1 - 12, wherein the porosity p of the positive electrode film layer is 20% to 50%, optionally 25% to 40%.

14. A power consuming device, comprising a secondary battery (5) according to any one of claims 1 to 13.

**Patentansprüche**

1. Sekundärbatterie (5), umfassend eine positive Elektrodenplatte und eine Elektrolytlösung,

wobei die positive Elektrodenplatte ein Substrat und eine auf mindestens einer Seitenfläche des Substrats bereitgestellte positive Elektrodenfilmschicht umfasst, wobei die positive Elektrodenfilmschicht ein positives Elektrodenaktivmaterial enthält und das positive Elektrodenaktivmaterial ein lithiumhaltiges Phosphat mit Olivinstruktur umfasst;
wobei die Elektrolytlösung ein Lösungsmittel, ein Additiv und ein Lithiumsalz enthält, wobei
das Lösungsmittel ein erstes Lösungsmittel und ein zweites Lösungsmittel umfasst,
wobei das erste Lösungsmittel ein cyclisches Ester-Lösungsmittel ist,
wobei das zweite Lösungsmittel ein lineares Carbonsäureester-Lösungsmittel ist,
wobei das Additiv ein filmbildendes Additiv umfasst, und
bezogen auf die Gesamtmasse der Elektrolytlösung das Lithiumsalz einen Massenanteil von W1, das filmbildende Additiv einen Massenanteil von W2 und das zweite Lösungsmittel einen Massenanteil von W3 aufweist, die folgende Beziehung erfüllen:

$$0{,}2 \leq (W1 + W2)/W3 \leq 0{,}4;$$

**dadurch gekennzeichnet, dass** die Sekundärbatterie (5) 1 g/μm ≤ (M1 + 0,5 × M2)/(L × (1-p)) ≤ 3 g/μm erfüllt; wobei
M1 die Masse des Lithiumsalzes in g ist,
M2 die Masse des zweiten Lösungsmittels in g ist,
L die Dicke der positiven Elektrodenfilmschicht auf einer Seite in μm ist, und
p die Porosität der positiven Elektrodenfilmschicht ist, wobei p gemäß GB/T 24586-2009 bestimmt wird.

2. Sekundärbatterie (5) nach Anspruch 1, wobei 0,25 ≤ (W1 + W2)/W3 ≤ 0,36; und/oder wobei das cyclische Ester-Lösungsmittel mindestens eines ist, ausgewählt aus Ethylencarbonat, Propylencarbonat, γ-Butyrolacton und Sulfolan.

3. Sekundärbatterie (5) nach Anspruch 1 oder Anspruch 2, wobei das lineare Carbonsäureester-Lösungsmittel mindestens eines ist, ausgewählt aus Methylformiat, Ethylformiat, Methylacetat, Ethylacetat, Propylacetat, Methylacrylat und Ethylacrylat.

4. Sekundärbatterie (5) nach einem der Ansprüche 1 bis 3, wobei das filmbildende Additiv mindestens eines ist, ausgewählt aus Vinylencarbonat, Vinylethylencarbonat und Fluorethylencarbonat.

5. Sekundärbatterie (5) nach einem der Ansprüche 1 bis 4, wobei das Lithiumsalz mindestens eines ist, ausgewählt aus $LiPF_6$, $LiBF_4$, LiFSI, LiTFSI und $LiCF_3O_3$.

6. Sekundärbatterie (5) nach einem der Ansprüche 1 bis 5, wobei, bezogen auf die Gesamtmasse der Elektrolytlösung, der Massenanteil W1 des Lithiumsalzes 1 % bis 15 %, optional 6 % bis 15 %, beträgt.

7. Sekundärbatterie (5) nach einem der Ansprüche 1 bis 6, wobei, bezogen auf die Gesamtmasse der Elektrolytlösung, der Massenanteil W2 des filmbildenden Additivs 1 % bis 10 %, optional 2 % bis 8 %, beträgt.

8. Sekundärbatterie (5) nach einem der Ansprüche 1 bis 7, wobei, bezogen auf die Gesamtmasse der Elektrolytlösung, der Massenanteil W3 des zweiten Lösungsmittels 30 % bis 70 %, optional 40 % bis 60 %, beträgt; optional beträgt,

bezogen auf die Gesamtmasse der Elektrolytlösung, der Massenanteil des ersten Lösungsmittels 10 % bis 50 %, optional 20 % bis 40 %.

**9.** Sekundärbatterie (5) nach einem der Ansprüche 1 bis 8, wobei das Additiv ferner ein Wasserentfernungsadditiv umfasst, das durch die folgende Formel 1 dargestellt ist,

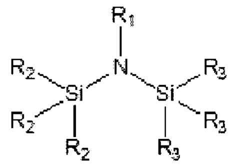

Formel I

wobei $R_1$ ein Wasserstoffatom, ein Lithiumatom, ein Kaliumatom, ein Natriumatom oder eine Methylgruppe ist und $R_2$ und $R_3$ unabhängig voneinander jeweils eine C1- bis C2-Alkylgruppe oder eine C2- bis C3-Alkenylgruppe sind.

**10.** Sekundärbatterie (5) nach Anspruch 9, wobei das Wasserentfernungsadditiv mindestens eines ist, ausgewählt aus Hexamethyldisilazan, Lithiumbis(trimethylsilyl)amid (LiHMDS), Natriumbis(trimethylsilyl)amid (NaHMDS), Kaliumbis(trimethylsilyl)amid (KHMDS), Heptamethyldisilazan und 1,3-Divinyl-1,1,3,3-tetramethyldisilazan; und/oder wobei, bezogen auf die Gesamtmasse der Elektrolytlösung, der Massenanteil des Wasserentfernungsadditivs 0,5 % oder weniger, optional 0,1 % bis 0,5 %, beträgt.

**11.** Sekundärbatterie (5) nach einem der Ansprüche 1-10, wobei die Sekundärbatterie (5) $1\ g/\mu m \leq (M1 + 0{,}5 \times M2) / (L \times (1\text{-}p)) \leq 2\ g/\mu m$ erfüllt.

**12.** Sekundärbatterie (5) nach einem der Ansprüche 1-11, wobei die Dicke L der positiven Elektrodenfilmschicht auf einer Seite 80 μm bis 140 μm, optional 90 μm bis 130 μm, beträgt.

**13.** Sekundärbatterie (5) nach einem der Ansprüche 1-12, wobei die Porosität p der positiven Elektrodenfilmschicht 20 % bis 50 %, optional 25 % bis 40 %, beträgt.

**14.** Stromverbrauchende Vorrichtung, umfassend eine Sekundärbatterie (5) nach einem der Ansprüche 1 bis 13.

**Revendications**

**1.** Batterie secondaire (5), comprenant une plaque d'électrode positive et une solution électrolytique,

dans laquelle la plaque d'électrode positive comprend un substrat et une couche de film d'électrode positive disposée sur au moins une surface latérale du substrat, la couche de film d'électrode positive contenant un matériau actif d'électrode positive, et le matériau actif d'électrode positive comprenant un phosphate contenant du lithium ayant une structure olivine ;
dans laquelle la solution électrolytique contient un solvant, un additif et un sel de lithium, dans laquelle
le solvant comprend un premier solvant et un second solvant,
le premier solvant étant un solvant ester cyclique,
le second solvant étant un solvant ester carboxylique linéaire,
l'additif comprend un additif formateur de film, et
sur la base de la masse totale de la solution électrolytique, le sel de lithium a une fraction massique de W1, l'additif formateur de film a une fraction massique de W2, et le second solvant a une fraction massique de W3, qui satisfont à la relation suivante :

$$0{,}2 \leq (W1 + W2)/W3 \leq 0{,}4 ;$$

**caractérisée en ce que** la batterie secondaire (5) satisfait à $1\ g/\mu m \leq (M1 + 0{,}5 \times M2)/(L \times (1\text{-}p)) \leq 3\ g/\mu m$ ; dans laquelle
M1 est la masse du sel de lithium, en g, M2 est la masse du second solvant, en g,

L est l'épaisseur de la couche de film d'électrode positive sur un côté, en $\mu$m, et
p est la porosité de la couche de film d'électrode positive, p étant déterminée conformément à la norme GB/T 24586-2009.

**2.** Batterie secondaire (5) selon la revendication 1, dans laquelle $0,25 \leq (W1 + W2)/W3 \leq 0,36$ ; et/ou le solvant ester cyclique est au moins un élément choisi parmi le carbonate d'éthylène, le carbonate de propylène, la $\gamma$-butyrolactone et le sulfolane.

**3.** Batterie secondaire (5) selon la revendication 1 ou la revendication 2, dans laquelle le solvant ester carboxylique linéaire est au moins un élément choisi parmi le formiate de méthyle, le formiate d'éthyle, l'acétate de méthyle, l'acétate d'éthyle, l'acétate de propyle, l'acrylate de méthyle et l'acrylate d'éthyle.

**4.** Batterie secondaire (5) selon l'une quelconque des revendications 1 à 3, dans laquelle l'additif formateur de film est au moins un élément choisi parmi le carbonate de vinylène, le carbonate de vinyléthylène et le fluoroéthylène carbonate.

**5.** Batterie secondaire (5) selon l'une quelconque des revendications 1 à 4, dans laquelle le sel de lithium est au moins un élément choisi parmi $LiPF_6$, $LiBF_4$, LiFSI, LiTFSI et $LiCF_3O_3$.

**6.** Batterie secondaire (5) selon l'une quelconque des revendications 1 à 5, dans laquelle, sur la base de la masse totale de la solution électrolytique, la fraction massique W1 du sel de lithium est de 1 % à 15 %, optionnellement de 6 % à 15 %.

**7.** Batterie secondaire (5) selon l'une quelconque des revendications 1 à 6, dans laquelle, sur la base de la masse totale de la solution électrolytique, la fraction massique W2 de l'additif formateur de film est de 1 % à 10 %, optionnellement de 2 % à 8 %.

**8.** Batterie secondaire (5) selon l'une quelconque des revendications 1 à 7, dans laquelle, sur la base de la masse totale de la solution électrolytique, la fraction massique W3 du second solvant est de 30 % à 70 %, optionnellement de 40 % à 60 % ; optionnellement, sur la base de la masse totale de la solution électrolytique, la fraction massique du premier solvant est de 10 % à 50 %, optionnellement de 20 % à 40 %.

**9.** Batterie secondaire (5) selon l'une quelconque des revendications 1 à 8, dans laquelle l'additif comprend en outre un additif d'élimination de l'eau représenté par la formule 1 suivante,

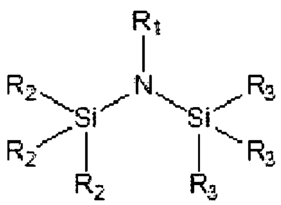

Formule I

dans laquelle $R_1$ est un atome d'hydrogène, un atome de lithium, un atome de potassium, un atome de sodium ou un groupe méthyle, et $R_2$ et $R_3$ sont indépendamment l'un de l'autre un groupe alkyle en C1 à C2 ou un groupe alcényle en C2 à C3.

**10.** Batterie secondaire (5) selon la revendication 9, dans laquelle l'additif d'élimination de l'eau est au moins un élément choisi parmi l'hexaméthyldisilazane, le bis(triméthylsilyl)amide de lithium (LiHMDS), le bis(triméthylsilyl)amide de sodium (NaHMDS), le bis(triméthylsilyl)amide de potassium (KHMDS), l'heptaméthyldisilazane et le 1,3-divinyl-1,1,3,3-tétraméthyldisilazane ; et/ou sur la base de la masse totale de la solution électrolytique, la fraction massique de l'additif d'élimination de l'eau est de 0,5 % ou moins, optionnellement de 0,1 % à 0,5 %.

**11.** Batterie secondaire (5) selon l'une quelconque des revendications 1 à 10, dans laquelle la batterie secondaire (5) satisfait à $1\ g/\mu m \leq (M1 + 0,5 \times M2) / (L \times (1\text{-}p)) \leq 2\ g/\mu m$.

**12.** Batterie secondaire (5) selon l'une quelconque des revendications 1 à 11, dans laquelle l'épaisseur L de la couche de

film d'électrode positive sur un côté est de 80 µm à 140 µm, optionnellement de 90 µm à 130 µm.

**13.** Batterie secondaire (5) selon l'une quelconque des revendications 1 à 12, dans laquelle la porosité p de la couche de film d'électrode positive est de 20 % à 50 %, optionnellement de 25 % à 40 %.

**14.** Dispositif consommateur d'énergie, comprenant une batterie secondaire (5) selon l'une quelconque des revendications 1 à 13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 103107364 B
- CN 109980282 A
- CN 106025359 A
- CN 108306049 A